# EUROPÄISCHE PATENTSCHRIFT

(11) **EP 1 040 319 B1**
(45) Veröffentlichungstag und Bekanntmachung des Hinweises auf die Patenterteilung: **02.03.2005**
(21) Anmeldenummer: 99950717.1
(22) Anmeldetag: 13.10.1999
(51) Int. Cl.: G01D 5/34

(54) **ANORDNUNG ZUR ERFASSUNG DER VERÄNDERUNG DER POSITIONIERUNG ZWISCHEN ZWEI SICH RELATIV ZUEINANDER BEWEGENDEN KÖRPERN**
DEVICE FOR DETECTING THE POSITIONAL CHANGE BETWEEN TWO BODIES MOVING IN RELATION TO ONE ANOTHER
DISPOSITIF POUR DETECTER UN CHANGEMENT DE POSITIONNEMENT ENTRE DEUX CORPS POUVANT SE DEPLACER L'UN PAR RAPPORT A L'AUTRE

(30) Priorität: 17.10.1998 DE 19847992
(43) Veröffentlichungstag der Anmeldung: 04.10.2000
(73) Patentinhaber: CARL ZEISS JENA GmbH, 07745 Jena (DE)
(72) Erfinder: BARTZKE, Karlheinz, D-07747 Jena (DE); MACK, Stefan, D-07745 Jena (DE); MASCHKE, Gunter, D-07743 Jena (DE); BURKHARDT, Matthias, D-07768 Eichenberg (DE); DITAS, Peter, D-07549 Gera (DE)
(74) Vertreter: Geyer, Werner, Dr.-Ing.
(86) Internationale Anmeldenummer: PCT/EP1999/007701
(87) Internationale Veröffentlichungsnummer: WO 2000/023768

(56) Entgegenhaltungen:
- EP-A- 0 096 152
- DE-A- 2 416 399
- FR-A- 2 179 224
- PATENT ABSTRACTS OF JAPAN vol. 7, no. 188 (P-217) [1333], 17. August 1983 (1983-08-17) & JP 58 088608 A (TOUKIYOU KOSUMOSU DENKI K.K.), 26. Mai 1983 (1983-05-26)

## Beschreibung

Die Erfindung bezieht sich auf eine Anordnung zur Erfassung der Positionierung zwischen zwei sich relafiv zueinander bewegenden Körpern gemäß dem Oberbegriff des Anspruchs 1.

Solche Positioniersysteme werden beispielsweise in der Mikroskopie eingesetzt, wo es beim Verstellen von Blenden um Stellwege im Millimeterbereich geht.

Aus dem Stand der Technik sind eine Vielzahl von Positionieranordnungen bekannt geworden, die mit Hilfe von Lichtschranken Stell- und Meßwege im Millimeterteteich erzielen. Lichtschranken werden In geschlossener Bauart als Gabel- und als Reflexlichtschranke eingesetzt. In offener Bauart sind Lichtsender und Uchtempfänger räumlich getrennt. Lichtschranken werden vorwiegend für Schaltfunktionen eingesetzt. Durch die Verwendung von Fahnen bei Gabellichranken oder Reflektoren bei Reflexlichtschranken werden Lichtschranken für Wegmessungen verwendet. Als Lichtschranken werden miniaturisierte SMD-Bauelemente eingesetzt, die zwar preiswert sind, jedoch Meßbereiche nur im Millimeterbereich gewährleisten. Die allgemein bekannten Halisonden-Wegmeßsysteme besitzen eine höhere Genauigkeit, haben jedoch den Nachteil einer relativ hohen Empfindlichkeit des Aufbaus des Gesamtsystems durch Magnetfelder. Schwingungen. Vibrationen und Temperaturänderungen.

Des weiteren werden zum Beispiel durch die Firma Dr. Johannes Heidenhain GmbH eine Reihe von numerischen Meßsystemen angeboten, die eine Bewegung von Körpern zueinander im Anwendungsgebiet des Maschinenbaus messen. Mit diesen Meßsystemen sind Genauigkeiten von < 1 µm in Meß- und Stellbereichen von ca. 100 mm möglich, wobei jedoch der technische Aufwand für diese Meßsysteme und damit der Preis relativ groß ist.

Es ist weiterhin bekannt, die elastische Verformbarkeit der Haut mit einer Lichtschranke zu messen (DE-A-38 32 690). Nachteilig bei dieser Anordnung ist, daß Meßbereiche von nur etwa 1 mm und nur Auflösungen ≥ 10 µm erzielt und daß die Meßsignale der Lichtschranke durch Temperatureinflüsse und Driften verfälscht werden.

Die EP 0 096 152 A2 zeigt eine Anordnung zur Erfassung der Veränderung der Positionierung zwischen zwei sich relativ zueinander bewegenden Körpern gemäß dem Oberbegriff des Anspruchs 1.

Die DE 24 16 399 A1 beschreibt eine Temperaturkompensation bei einer Anordnung zur Erfassung der Veränderung der Positionierung zwischen zwei sich relativ zueinander bewegenden Körpern. Die Temperaturkompensation beruht darauf, daß die temperaturbedingte erhöhte Lichtemission von Fotodioden von Lichtschranken der Anordnung ausgewertet wird und dazu benutzt wird, um den durch die Fotodioden fließenden Strom zu verringern, wodurch deren Lichtemission wiederum verringert wird.

Die JP 58-88608 beschreibt eine Anordnung zur Erfassung der Veränderung der Positionierung zwischen zwei sich relativ zueinander bewegenden Körpern, bei der der Strom, mit dem die Leuchtdioden der Lichtschranken beaufschlagt werden, mittels einer Steuerungsschaltung konstant gehalten wird, um die gewünschte Driftkompensation zu bewirken.

Die FR 2,179,224 beschreibt eine Anordnung zur Erfassung der Veränderung der Positionierung zwischen zwei sich relativ zueinander bewegenden Körpern mittels einem Paar von Lichtschrankensystemen.

Ausgehend vom aufgezeigten Stand der Technik liegt der Erfindung die Aufgabe zugrunde, eine Anordnung zur Erfassung der Veränderung der Positionierung zwischen zwei sich relativ zueinander bewegenden Körpern zu realisieren, die eine effektive Driftkompensation aufweist.

Die Aufgabe wird erfindungsgemäß bei einer Anordnung der eingangs genannten Art durch die Merkmale des kennzeichnenden Teils des Anspruchs 1 gelöst.

Die erfindungsgemäße Anordnung weist eine relativ hohe Positioniergenauigkeit auf, ist relativ klein und kann kostengünstig produziert und montiert werden und kann Stellschritte im Bereich unter 1 µm erfassen.

Gemäß einer bevorzugten Ausbildung der Erfindung befindet sich je ein Paar der Lichtschrankensysteme in Wechselwirkung mit den Mitteln, was zu einer Erhöhung der Empfindlichkeit, Linearisierung der Kennlinie und zumindest teilweiser Kompensation von Störungen der auswertbaren Signale führt.

Bei einer anderen vorteilhaften Weiterbildung der Erfindung sind die ersten Mittel in Form einer Blende. ausgebildet. Weiterhin ist es zum Erzielen großer Meßwege von Vorteil, wenn die Lichtschrankensysteme zueinander fest angeordnet und der sich retativ dazu bewegende Körper mit mindestens einer Blende in Form eines Keils versehen ist, wobei jeder Keil mindestens ein zugeordnetes Paar der Lichtschrankensysteme duhchläuft. Weiterhin ist es auch von Vorteil, die Reflexions- oder Transmissionseigenschaften der Blende ortsabhängig zu gestalten.

Es ist weiterhin bevorzugt, daß die Driftkompensation der Lichtschrankensysteme mittels einer elektronischen Schaltung vorgenommen wird. Gemäß einer weiteren bevorzugten Ausbildung der Erfindung ist für jedes Lichtschrankensystem eine Driftkompensation vorgesehen.

Die Erfindung wird nachstehend beispielshalber anhand von Prinzipdarstellungen noch näher erläutert. Es zeigen:
- Fig. 1: eine Prinzipdarstellung einer erfindungsgemäßen Anordnung;
- Fig. 2: eine Prinzipdarstellung einer anderen effindungsgemäßen Anordnung:
- Fig. 3: verschiedene Gestaltungsformen für die bei einer erfindungsgemäßen Anordnung einsetzbare Blende:
a) Blende mit senkrechter Reflektorkante:
b) Blende mit keilförmiger Reflektorkante;
c) Blende mit kontinuierlichem Reflektorübergang;
- Fig.4: eine Prinzipdarstellung einer Schattung zur Driftkompensation bei einer erfindungsgemäßen Anordnung:
- Fig. 5: eine Prinzipdarsteltung der AC-Betriebsart einer Lichtschranke bei einer erfindungsgemäßen Anordnung, nämlich:
a) Schaltbild der Lichtschranke;
b) sinusfömige Eingangsspannung der Lichtschranke;
c) ortsabhängige Ausgangsspannung der Lichtschranke;

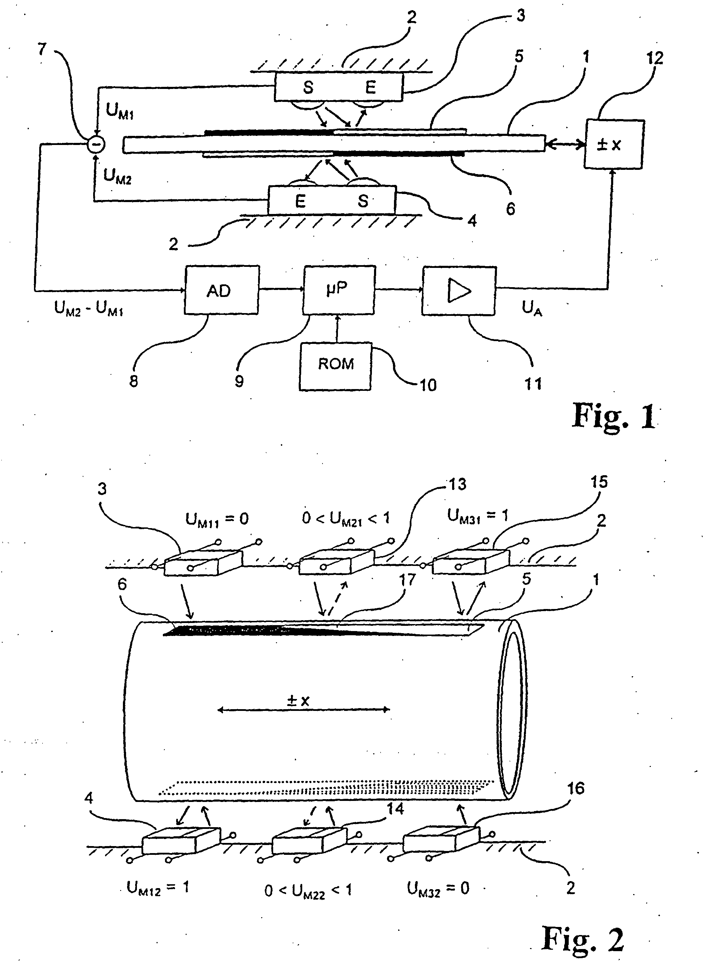

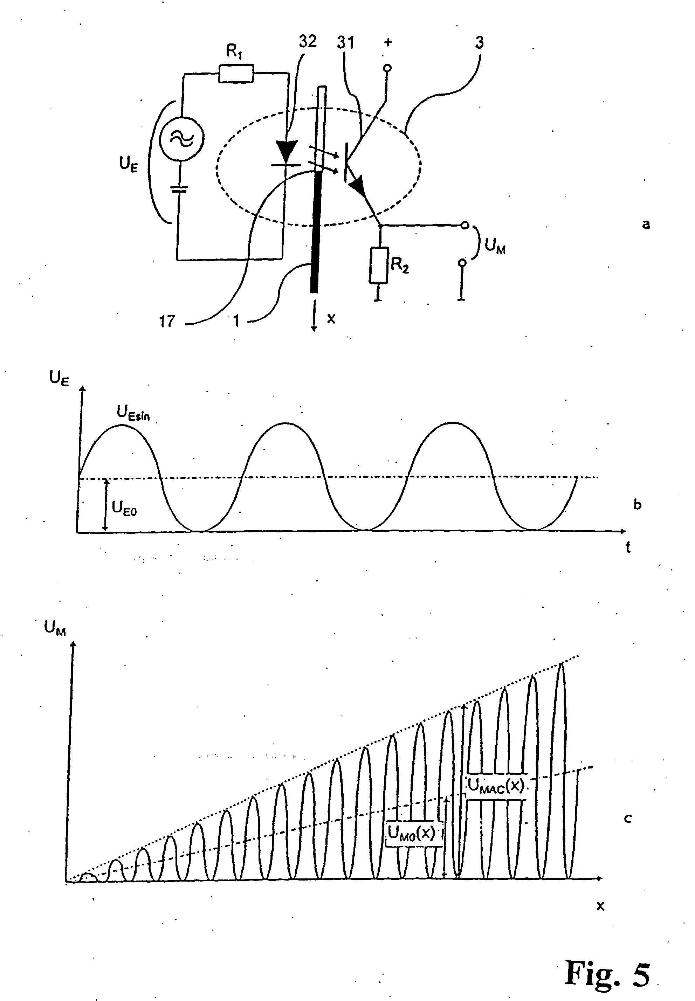

Die Figur 1 zeigt eine Prinzipdarstellung der erfindungsgemäßen Positioniereinrichtung mit Reflexlichtschranken, wobei die erfindungsgemäße Driftkompensation später mit Bezug auf Fig. 5 beschrieben wird. Dabei ist ein beweglicher Körper 1 zwischen einem oberen und einem unteren feststehenden Körper 2 in x-Richtung verschiebbar angeordnet.

Auf der Ober- und Unterseite des beweglichen Körpers 1 sind zentralsymmetrisch zwei Reflektorblenden 5 und zwei Absorberblenden 6 aufgebracht. Jede Reflektorblende 5 weist eine fast 100%ige diffuse Reflexion auf. wie sie z. B. eine Kodak neutral white test card bietet, und jede Absorberblende 6 reflektiert fast kein licht, wie es bei mattschwarz lackierten Oberflächen der Fall ist.

An den beiden Innenflächen der feststehenden Körper 2 sind in einem definierten Abstand zu den Blenden 5 und 6, der z. B. 3 mm beträgt, spiegel- oder zentralsymmetrisch Reflexlichtschranken 3 und 4 angeordnet, die ein Paar bilden. Zwei Sender S senden Licht auf die Blenden 5 und 6. Die Intensitäten des an den Blenden reflektierten und von zwei Empfängern E empfangenen Uchtes ist von der Stellung x zweier Reflektorkanten 17 relativ zu den Reflexlichtschranken 3 oder 4 abhängig. Eine Verschiebung des beweglichen Körpers 1 zum feststehenden Körper 2 bewirkt an der einen Lichtschranke eine Zunahme und an der anderen Lichtschranke eine Abnahme der dort jeweils auftretenden Meßspannungen U_{M1} und U_{M2}.

Eine Differenzschaltung 7 bildet die Differenz dieser Meßspannungen U_{M1} und U_{M2}. Durch die Differenzbildung der Meßspannungen U_{M1} und U_{M2} ergibt sich eine Verdoppelung der Empfindlichkeit des Positionsrneßsystems, eine Linearisierung der Kennlinie bei parabelförmigem Spannungsverlauf und eine teilweise Kompensation von Driften und Störsignalen auf beiden Lichtschranken.

Bei optimaler Ausführung des Positionsmeßsystems beträgt der Meßbereich ca. 2 mm und die maximale Meßspannungsänderung 4 V. Die Linearität der Kennlinie ist besser als 1%.

Die Meßspannung U_{M} = U_{M2} - U_{M1} wird in einem AD-Wandler 8 digitalisiert und das Signal einem Mikroprozessor 9 zugeführt. Der Mikroprozessor 9 korrigiert z. B. Nichtlinearitäten der Kennlinie durch Korrekturwerte. die in einem ROM-Speicher 10 abgelegt sind. Der Mikroprozessor 9 steuert ferner Ober einen Verstärker 11 einen Aktor 12 und stellt hierdurch den beweglichen Körper 1. Mit dieser Anordnung sind Positioniergenauigkeiten von ± 1 µm erzielbar.

Driften der Lichtschranken 3 und 4 können dadurch korrigiert werden, daß in bestimmten Zeitabständen der bewegliche Körper 1 durch den Mikroprozessor 9 und den Aktor 12 an feste Endanschläge gefahren wird und das Positionsmeßsystem durch diese bekannten Positionen nachkalibriert wird.

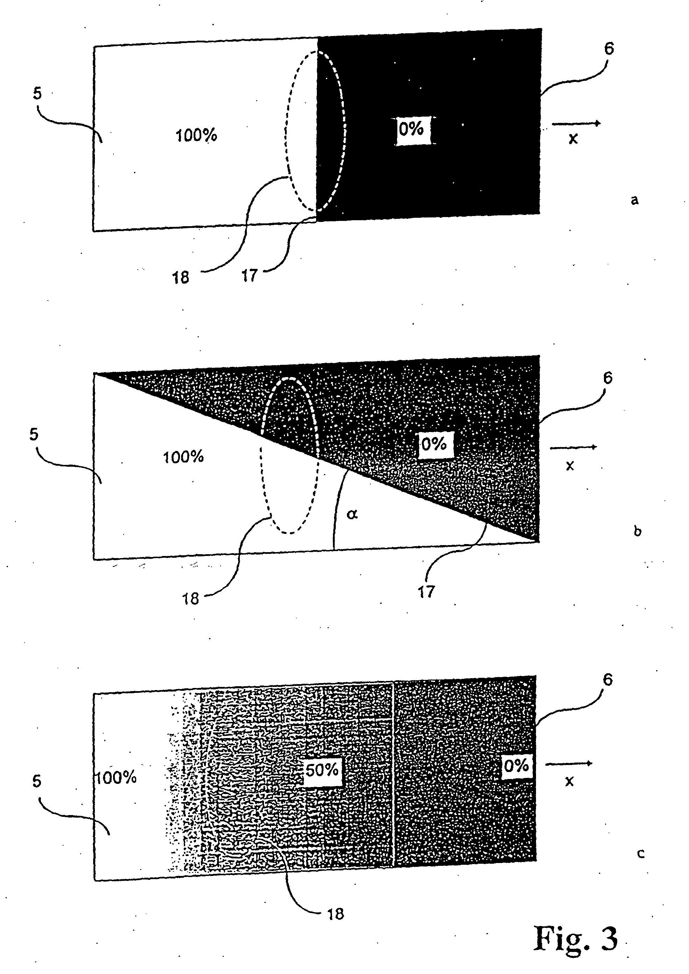

Die Figur 2 zeigt die Prinzipdarstellung einer weiteren erfindungsgemäßen Positioniereinrichtung, wobei die erfindungsgemäße Driftkompensation mit Bezug auf Fig.5 beschrieben wird. Am feststehenden Körper 2 sind oben und unten jeweils drei Lichtschranken 3 und 4, 13 und 14, 15 und 16 befestigt, die drei Lichtschrankenpaare bilden. Jedes dieser Lichtschrankenpaare ist in Differenz geschaltet und erzeugt die Differenzspannungen U_{M1} = U_{M12} - U_{M11}, U_{M2}= U_{M22} - U_{M21} bzw. U_{M3} = U_{M32} - U_{M31}. Der bewegliche Körper 1 ist z. B. als eine zylinderförmige Linsengruppe ausgebildet, auf deren Umfang längs Mantellinien oben und unten je ein keilförmiger Reflektor 5 und ein keilförmiger Absorber 6 zentralsymmetrisch aufgebracht sind, deren Blendenkanten 17 zur x-Achse einen spitzen Winkel **α** bilden. Der spitze Winkel α bewirkt eine Vergrößerung des Meßbereiches der Lichtschranken um einen Faktor von etwa (tan α)⁻¹ und die drei Lichtschrankenpaare lassen zusätzlich eine Verdreifachung des Meßbereiches gegenüber dem Lichtschrankenmeßbereich nach Fig. 1 erreichen. Bei einem Winkel von α = 20° ist mit der gezeigten Anordnung ein Meßbereich von 15 mm und bei einem Winkel von α = 10° ein Meßbereich von 30 mm erzielbar. Der Abstand benachbarter Reflexlichtschranken ist etwas geringer als die Ausdehnung der Reflektorkante 17 in x-Richtung. Genauigkeiten von ±3 µm sind erreichbar, wenn in die Positionsbestimmung weitere (in der Zeichnung nicht gezeigte) parallel nebeneinander liegende Lichtschrankenpaare und Blenden einbezogen werden, die zu einer Vervielfachung der Meßspannung U_{M} führen. Um ein Übersprechen der Lichtschranken zu vermeiden, können die passiven Lichtschranken, unter denen sich die Reflektorkante 17 nicht befindet, abgeschattet werden.

Eine Erhöhung des Meßbereiches ist auch durch eine Vergrößerung des Lichtschrankenabstandes zur Blende erzielbar, wodurch aber die Meßempfindlichkeit der Anordnung sinkt.

Die in den Positioniersystemanordnungen der Figuren 1 und 2 verwendeten Reflexionslichtschranken weisen als SMD-Bauelemente Vorteile wie kleine Baugröße und niedrige Preise auf. Die Anwendung von Gabeflichtschranken erfordert eine entsprechende Umgestaltung der Blenden 5 und 6.

Die Figur 3 zeigt drei Prinzipdarstellungen für einsetzbare Blendengestaltungen. In Fig. 3a ist eine Blende, wie in der Fig. 1 verwendet, dargestellt. Die Reflektorkante 17 liegt senkrecht zur Bewegungsrichtung x. Der Reflektor 5 hat eine Reflektivität von 100% und der Absorber eine Reflektivität von 0%. Der Lichtfleck 18 der Lichtschranke verschiebt sich bei einer x-Verstellung der Blende vom dunklen Absorber zum hellen Reflektor oder umgekehrt und ändert hierdurch seine Lichtintensität. Der Meßbereich der Anordnung entspricht etwa der Breite des Lichtfleckes in x-Richtung.

In Fig. 3b ist eine Blende, wie in Figur 2 verwendet, dargestellt. Reflektor 5 und Absorber 6 sind keilförmig gestaltet. Die Reflektorkante 17 liegt unter dem Winkel α spitzwinklig zur x-Richtung. Im Lichtfleck 18 der Lichtschranke verändert sich bei Verschiebung der Blende in x-Richtung der Anteil der Reflektorfläche zu Lasten der Absorberfläche und umgekehrt. Hierdurch ändert sich die Lichtintensität des Lichtfleckes 18. Der Meßbereich des Meßsystems erhöht sich etwa um einen Faktor (tan α)⁻¹ und entspricht etwa der Blendenlänge minus Lichtfleckbreite.

In Fig. 3c ist eine Blende dargestellt, bei welcher der Übergang von der Reflektorfläche zur Absorberfläche kontinuierlich gestaltet ist. Im Lichtfleck 18 der Lichtschranke ändert sich allmählich die Reflektivität bei Verschiebung der Blenden in x-Richtung. Wie in Fig. 3b vergrößert sich der Meßbereich des Meßsystems und entspricht etwa der Blendenlänge minus Lichtfleckbreite.

Vorteile der Blendengestaltungen nach Fig. 3b und 3c bestehen in der einfach realisierbaren Meßbereichsvergrößerung. des Lichtschrankenpositionsmeßsystems und darin, daß durch eine definierte nichtlineare Formgebung der Reflektorkante 17 bzw. durch einen definierten nichtlinearen Übergang von der 100%igen Reflektivität der Reflektorfläche zur 0%igen Reflektivität der Absorberfläche ein Linearitätsfehler der Kennlinie des Positionsmeßsystems korrigiert werden kann.

Die in den Fig. 3a bis 3c dargestellten Blenden sind für Reflexionslichtschranken anwendbar: Analog gestaltete Transmissionsblenden sind für Gabellichtschranken zu verwenden.

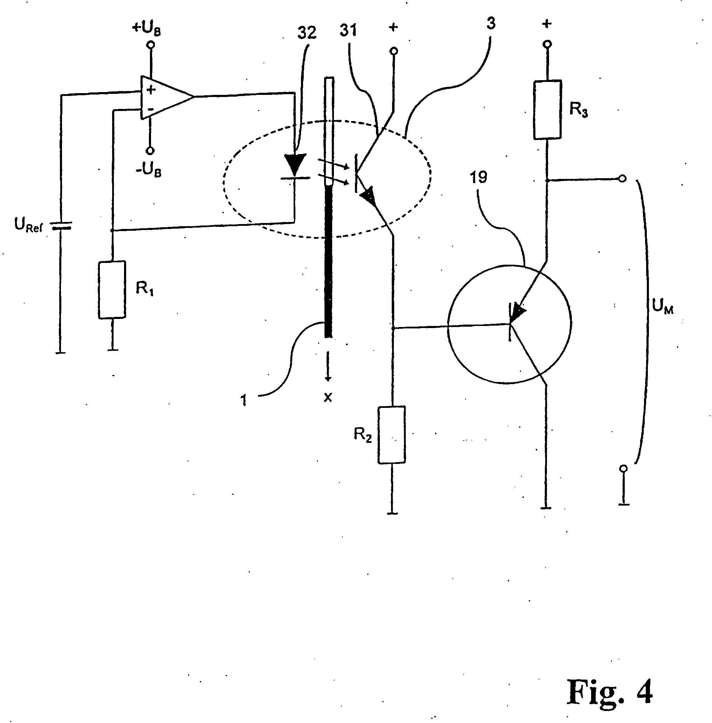

Die Figur 4 zeigt als Beispiel eine Prinzipdarstellung einer Schaltung zur elektronischen Driftkompensation der Lichtschranke 3, wie sie bei einer erfindungsgemäßen Anordnung eingesetzt werden kann. Insbesondere durch die Eigenerwärmung eines Fototransistors 31 in der Lichtschranke 3 driftet die Meßspannung U_{M} der Lichtschranke und verursacht Meßfehler. falls keine Driftkompensation vorgesehen ist. Zwar wird durch die Differenzschaltung des Lichtschrankenpaares die Drift teilweise kompensiert, aber eine vollständige Kompensation ist nur erzielbar, wenn die zwei Lichtschranken identische Eigenschaften aufweisen und gleichen Bedingungen ausgesetzt sind, insbesondere gleiche Lichtintensitäten empfangen.

Eine vollständige Kompensation der Drift des Fototransistors 31 wird erfindungsgemäß durch eine Schaltung erzielt, in der ein pnp-Kompensationstransistor 19 eine gleich große Gegendrift zum Fototransistor 31 erzeugt. Die am Ausgang der Schaltung anliegende Meßspannung U_{M} ist dann driftfrei. Für eine vollständige Kompensation der Drift sollte der Kompensationstransitor 19 in das Gehäuse der Lichtschranke 3 direkt integriert werden oder zumindest einen guten thermischen Kontakt zur Lichtschranke 3 aufweisen. Durch die Anordnung eines npn-Kompensationstransitors 19 in unmittelbarer Nähe der Lichtschranke 3 sind Driftverringerungen um den Faktor 3 erzielbar.

Mit einer modifizierten Schaltung kann die Drift der lichtschranke 3 auch durch einen npn-Transistor kompensiert werden.

Figur 5 zeigt eine Prinzipdarstellung einer Driftkompensation der erfindungsgemäßen Anordnung für die Lichtschranke 3 durch einen AC-Betrieb. Das Driften der Meßspannung U_{M} einer Lichtschranke ist ein quasistationärer Vorgang. Sie ändert sich merklich erst im Verlauf einiger Minuten. Wechselspannungssignale der Lichtschranke sind driftfrei, da sie kurzperiodisch sind. Sie bieten den Vorteil, die Lichtschranke driftfrei betreiben zu können.

in Fig. 5a ist das Schaltbild der Lichtschranke 3 mit einer Eingangsspannung U_{E} und einer Meßspannung U_{M} dargestellt.

In Fig. 5b ist die sinusförmige Eingangspannung U_{E} der Lichtschranke 3 dargestellt, die sich aus einer Sinusspannung U_{Esin} und einer Offsetspannung U_{E0} zusammensetzt. Durch die Offsetspannung U_{E} liegt am Eingang der Lichtschranke nie eine negative Spannung an. Infolge der sinusförmigen Eingangsspannung U_{E} erzeugt eine Photodiode 32 ein sinusförmiges Wechsellichtsignal, das zwischen Null und einer maximalen Intensität schwankt.

In Fig. 5c ist die von der Lage x der Reflektorkante 17 abhängige Meßspannung U_{M} dargesteltt, die durch die Einwirkung des Wechsellichtes der Fotodiode 32 auf den Fototransistor 31 entsteht. Die Frequenz dieser Meßspannung U_{M} ist gleich der Frequenz der Eingangsspannung U_{E}. Die Meßspannung U_{M} weist einen von der Lage x der Reflektorkante 17 linear abhängigen Gleichanteil U_{M0}(x) und einen von der Lage x der Reflektorkante 17 linear abhängigen Wechselanteil U_{MAC}(x) auf. Der sinusförmige Wechselanteil U_{MAC}(x), der keinen Gleichanteil enthält, ist driftfrei. Seine Frequenz ist gleich der Frequenz der sinusförmigen Eingangsspannung U_{E} und seine Amplitude vergrößert sich linear mit der Stellung x der Reflektorkante 17 von 0 bis zu einem Maximalwert. Dieser Wechselanteil ist durch einfache elektronische Mittel, die in Fig. 3a nicht dargestellt sind, aus dem Meßsignal U_{M} der Lichtschranke 3 erzeugbar. Sein Effektivwert ist ein driftfreies Maß für die Stellung x der Blende.

### Bezugszeichen

- beweglicher Körper: 1
- feststehender Körper: 2
- obere Lichtschranken: 3, 13, 15
- untere Lichtschranke: 4, 14, 16
- Reflektorblende: 5
- Absorberblende: 6
- Differenzschaltung: 7
- AD-Wandler: 8
- Mikroprozessor: 9
- ROM-Speicher: 10
- Verstärker: 11
- Aktor: 12
- Reflektorkante: 17
- Lichtfleck: 18
- Kompensationstransistor: 19
- Fototransistor: 31
- Fotodiode: 32

## Patentansprüche

1. Anordnung zur Erfassung der Veränderung der Positionierung zwischen zwei sich retativ zueinander bewegenden Körpern (1, 2) mittels mindestens einem Paar von Lichtschrankensystemen (3, 4), wobei auf mindestens einem der sich bewegenden Körper (1, 2) erste Mittel (5, 6) angeordnet sind, die bei einer relativen Bewegung der Körper (1, 2) zueinander zu einer auswertbaren Signalveränderung der Lichtschrankensysteme führen, und wobei das mindestens eine Paar von Lichtschrankensystemen (3, 4) direkt oder über eine elektronische Schaltung miteinander verbunden und den auf den Körpern (1, 2) angeordneten ersten Mitteln (5, 6) zugeordnet ist, **dadurch gekennzeichnet, daß**, um eine Driftkompensation jedes Lichtschrankensystems (3, 4) durch zuführ an die Lichtschrankensysteme (3,4) im AC-Betrieb betrieben werden und zweite Mittel (9) vorgesehen sind, die geeignet sind, um von den einen Gleichanteil. (U_{MO} (x)) und einen driftfreien Wechselanteil (U_{MAC} (x)) enthaltenden Signalen (U_{M}) der Lichtschrankensysteme (3, 4) den Wechselanteil zu extrahleren.

2. Anordnung nach Anspruch 1, **dadurch gekennzeichnet, daß** je ein Paar der Lichtschrankensysteme in Wechselwirkung mit den ersten Mitteln (5,6) treten.

3. Anordnung nach Anspruch 1 oder 2, **dadurch gekennzeichnet, daß** die ersten Mittel (5,6) in Form einer Blende ausgebildet sind.

4. Anordnung nach einem der Ansprüche 1 bis 3, **dadurch gekennzeichnet, daß** die Lichtschrankensysteme (3,4) zueinander fest angeordnet und der sich relativ dazu bewegende Körper (1,2) mit mindestens einer Blende in Form eines Keiles versehen ist und jeder Keil mindestens ein zugeordnetes Paar der Lichtschrankensysteme (3,4) durchläuft.

5. Anordnung nach einem der Ansprüche 1 bis 3, **dadurch gekennzeichnet, daß** die Lichtschrankensysteme (3,4) zueinander fest angeordnet und der sich relativ dazu bewegende Körper (1,2) mit mindestens einer Blende versehen ist, deren Reflexions- oder Transmissionseigenschaften ortsabhängig sind.

## Claims

1. Arrangement for detecting the positional change between two bodies (1, 2) moving relative to one another by means of at least one pair of light barrier systems (3, 4), wherein first means (5, 6) are arranged on at least one of the moving bodies (1, 2) such that when the bodies (1, 2) move relative to one another there is a change in the signal of the light barrier systems that can be evaluated, and wherein the at least one pair of light barrier systems (3, 4) are connected with one another directly or via an electronic circuit and are associated with the first means (5, 6) arranged on the bodies (1, 2), **characterised in that**, in order to carry out drift compensation for each light barrier system (3, 4), the light barrier systems (3, 4) are operated in AC, and second means (9) are provided, which are suitable to extract the alternating component from the signals (U_{M}) of the light barrier systems (3, 4), said signals (U_{M}) including a direct component (U_{MO}(x)) and a drift-free alternating component (U_{MAC} (x)).

2. Arrangement according to claim 1, **characterised in that** one pair of the light barrier systems respectively interacts with the first means (5, 6).

3. Arrangement according to claim 1 or 2, **characterised in that** the first means (5, 6) are provided as a stop.

4. Arrangement according to any one of claims 1 to 3, **characterised in that** the light barrier systems (3, 4) are arranged so as to be fixed relative to one another and the body (1, 2) moving relative thereto is provided with at least one stop in the form of a wedge, each wedge passing through at least one associated pair of light barrier systems (3, 4).

5. Arrangement according to any one of claims 1 to 3, **characterised in that** the light barrier systems (3, 4) are arranged so as to be fixed relative to one another and the body (1, 2) moving relative thereto is provided with at least one stop whose reflection characteristics or transmission characteristics are spatially dependent.

## Revendications

1. Dispositif pour détecter le changement de positionnement entre deux corps (1, 2) se déplaçant l'un par rapport à l'autre, au moyen d'au moins une paire de systèmes à barrière lumineuse (3, 4), sur au moins l'un des corps (1, 2) se déplaçant étant disposés des premiers moyens (5, 6) qui, lors d'un déplacement relatif des corps (1, 2) l'un par rapport à l'autre, entraînent une variation exploitable des signaux des systèmes à barrière lumineuse, et la au moins une paires de systèmes à barrière lumineuse (3, 4) étant reliée entre elle directement ou par un circuit électronique et associée aux premiers moyens (5, 6) disposés sur les corps (1, 2), **caractérisé en ce que** pour exécuter une compensation de la dérive de chaque système à barrière lumineuse (3, 4), les systèmes à barrière lumineuse (3, 4) fonctionnent en mode AC et des deuxièmes moyens (9) sont prévus qui sont en mesure d'extraire la composante alternative des signaux (U_{M}), contenant une composante continue (U_{MO}(x)) et une composante alternative (U_{MAC}(x)) sans dérive, des systèmes à barrière lumineuse (3, 4).

2. Dispositif selon la revendication 1, **caractérisé en ce qu'**une paire des systèmes à barrière lumineuse entre en interaction avec les premiers moyens (5, 6).

3. Dispositif selon la revendication 1 ou 2, **caractérisé en ce que** les premiers moyens (5, 6) sont réalisés sous la forme d'un diaphragme.

4. Dispositif selon l'une des revendications 1 à 3, **caractérisé en ce que** les systèmes à barrière lumineuse (3, 4) sont disposés de manière fixe l'un par rapport à l'autre et le corps (1, 2) se déplaçant par rapport à ceux-ci est pourvu d'au moins un diaphragme sous la forme d'un coin, et chaque coin traverse au moins une paire associée des systèmes à barrière lumineuse (3, 4).

5. Dispositif selon l'une des revendications 1 à 3, **caractérisé en ce que** les systèmes à barrière lumineuse (3, 4) sont disposés de manière fixe l'un par rapport à l'autre et le corps (1, 2) se déplaçant par rapport à ceux-ci est pourvu d'au moins un diaphragme dont les propriétés de réflexion ou de transmission dépendent de l'emplacement.
